**Europäisches Patentamt**

**European Patent Office**

**Office européen des brevets**

(19)

(11) Veröffentlichungsnummer: **0 126 228**
**B1**

(12) **EUROPÄISCHE PATENTSCHRIFT**

(45) Veröffentlichungstag der Patentschrift:
**07.01.87**

(21) Anmeldenummer: **84102677.6**

(22) Anmeldetag: **12.03.84**

(51) Int. Cl.⁴: **H 05 K 5/02**, G 01 D 11/26,
H 02 B 15/02

(54) **Elektrooptische Anzeigevorrichtung.**

(30) Priorität: **07.04.83 CH 1872/83**

(43) Veröffentlichungstag der Anmeldung:
**28.11.84 Patentblatt 84/48**

(45) Bekanntmachung des Hinweises auf die Patenterteilung:
**07.01.87 Patentblatt 87/2**

(84) Benannte Vertragsstaaten:
**AT CH DE LI NL**

(56) Entgegenhaltungen:
**DE - A - 2 801 634**
**DE - A - 2 952 370**
**DE - B - 2 854 469**
**FR - A - 2 365 273**
**US - A - 3 010 235**

(73) Patentinhaber: **BBC Aktiengesellschaft Brown, Boveri & Cie., Haselstrasse, CH-5401 Baden (CH)**

(72) Erfinder: **Hettich, Alfons, Achenbergstrasse 375, CH-5322 Koblenz (CH)**
Erfinder: **Szczepanski, Bohdan, Ahornstrasse 13, CH-5442 Fislisbach (CH)**

## Beschreibung

Die Erfindung betrifft eine elektrooptische Anzeigevorrichtung gemäss dem Oberbegriff des Anspruchs 1.

Nahezu jedes elektrische Gerät ist mit einer elektrooptischen Anzeigevorrichtung ausgerüstet. Entsprechend der Vielzahl von optisch meld- und anzeigbaren Betriebszuständen, Ereignissen, Messdaten, Gefahrensituationen, usw., sind elektrooptische Anzeigevorrichtungen in Form von Lampen, Zeigerinstrumenten, Ziffern- oder Schriftanzeigen in noch zahlreicheren technischen Ausführungen, Formen, Grössen, Farben sowie auch geschmacklichen Gestaltungen bekannt (siehe z.B. den Verkaufskatalog 82/83 der Firma Distrilec, Zürich).

In der Mehrzahl der Anwendungen sind die elektrooptischen Anzeigevorrichtungen an gut sichtbarer Stelle, meist in Ausschnitten einer grösseren Gerätewand, insbesondere einer Frontplatte, angebracht.

Aus der Vielzahl der bekannten elektrooptischen Anzeigevorrichtungen lässt sich praktisch für jeden Anwendungsfall eine geeignete oder ein geeignetes Sortiment auswählen.

Bei der Konzeption eines elektrischen Geräts ist diese Auswahl jedoch bereits zu einem frühen Zeitpunkt zu treffen, da in der Frontplatte ein oder mehrere passende Ausschnitte vorgesehen und angebracht werden müssen. Ein nachträglicher Austausch einer Anzeigevorrichtung gegen eine andere ist wegen der Formenvielfalt praktisch ausgeschlossen. Eine elektrooptische Anzeigevorrichtung passt selten in den Ausschnitt einer anderen hinein. Insbesondere sind Lampen und Zeigerinstrumente in der Regel nicht gegeneinander austauschbar, weil Lampen fast immer kleine runde und Zeigerinstrumente grössere und rechteckige Ausschnitte erfordern. Häufig ist der Austausch einer elektrooptischen Anzeigevorrichtung mit dem Austausch der gesamten Frontplatte, eventuell einschliesslich weiterer daran montierter Geräteteile oder Anzeigevorrichtungen verbunden.

Elektrooptische Anzeigevorrichtungen mit Mehrfachfunktion sind für Spezialanwendungen bekannt, doch sind sie meist nicht universell einsetzbar. Häufig bereitet auch die fast immer notwendige Beschriftung der einzelnen elektrooptischen Anzeigevorrichtungen Probleme.

Es ist daher Aufgabe der Erfindung, eine elektrooptische Anzeigevorrichtung der eingangs genannten Art anzugeben, welche für eine Vielzahl von Anwendungsfällen einsetzbar, insbesondere gegen Zeigerinstrumente, Ziffern- oder Schriftanzeigen austauschbar, leicht und rationell montierbar, gut ablesbar, problemlos beschriftbar und schliesslich entweder als Einfach- oder Mehrfachfunktionsanzeige verwendbar ist. Diese Aufgabe wird erfindungsgemäss gelöst durch die Merkmale im Kennzeichen des Anspruchs 1.

Die durch die Erfindung erreichten Vorteile liegen im wesentlichen in der universellen Verwendbarkeit und der rationellen Montierbarkeit der elektrooptischen Anzeigevorrichtung. Der Erfindung ist es gelungen, aus einer Vielzahl von Einzelmerkmalen bekannter elektrooptischer Anzeigevorrichtungen gerade und ausschliesslich die funktionell wichtigsten auszuwählen und im Hinblick auf die genannte Aufgabe richtig zu einer neuen funktionsgerechten Einheit zu kombinieren.

Im einzelnen sind vor allem folgende Vorteile zu nennen:

Die Montage der erfindungsgemässen Anzeigevorrichtung erfolgt mittels der Blende. Diese kann ohne weiteres als in einen Ausschnitt eines Zeigerinstruments oder einer Ziffern- oder Schriftanzeige einsetzbar gestaltet sein, zumal sie in ihrer Grösse grundsätzlich für mehrere Anzeigelampen ausgebildet ist. Vor allem bei der Verwendung einer sogenannten Baukasten- oder Mosaiktechnik, bei der aus einer Serie von vorgefertigten standardisierten Geräteeinheiten, insbesondere auch Grössen, eine grosse Zahl verschiedener Geräte zusammensetzbar ist, ist es von erheblichem Vorteil in einen einzigen vorgefertigten Ausschnitt nach Belieben später verschiedene Anzeigevorrichtungen einsetzen zu können. Weiter ist zum Ausschneiden nur eines Ausschnitts auch nur ein und nicht viele Werkzeuge erforderlich.

Die erfindungsgemässe Anzeigevorrichtung ist für die Anzeige einer einzelnen Funktion, mehrerer voneinander unabhängiger einzelner Funktionen oder auch verschiedener Betriebszustände einzelner Funktionen verwendbar.

Die erfindungsgemässe Anzeigevorrichtung ist leicht beschriftbar. Die Beschriftung kann direkt auf den eigens dafür vorgesehenen Beschriftungsfeldern auf der Blende vorgenommen werden. Eine häufig schwierig vorzunehmende und unkorrigierbare Beschriftung der Frontplatte entfällt, was auch in bezug auf die Austauschbarkeit von erheblichem Vorteil ist.

Die mechanische Befestigung und elektrische Kontaktierung der Anzeigelampe/n ist auf der Trägerplatte kombiniert und kann dort in einem Schritt sehr einfach durch Lötung erfolgen.

Das Anschliessen der erfindungsgemässen Anzeigevorrichtung erfolgt sicher und schnell über die gut zugänglich auf der Rückseite der Trägerplatte angeordneten Kontaktelemente, welche z.B. als Steckkontakte ausgebildet sein können.

Schliesslich ist die erfindungsgemässe Anzeigevorrichtung gesamthaft, also bezüglich Planung, Fertigung und Montage erheblich kostengünstiger als vergleichbare bekannte Lösungen.

Weitere Merkmale, Vorteile sowie bevorzugte Ausgestaltungen der Erfindung ergeben sich aus der nachfolgenden Beschreibung eines Ausführungsbeispiels anhand von Zeichnungen.

Es zeigt:

Fig. 1 eine Ansicht der Vorder- bzw. Frontseite einer elektrooptischen Anzeigevorrichtung nach der Erfindung und

Fig. 2 eine vereinfachte, perspektivische Darstellung einer Blende mit Aufsicht auf ihre Rückseite sowie einer bestückten Trägerplatte.

In den Figuren sind übereinstimmende Teile mit übereinstimmenden Bezugszeichen versehen.

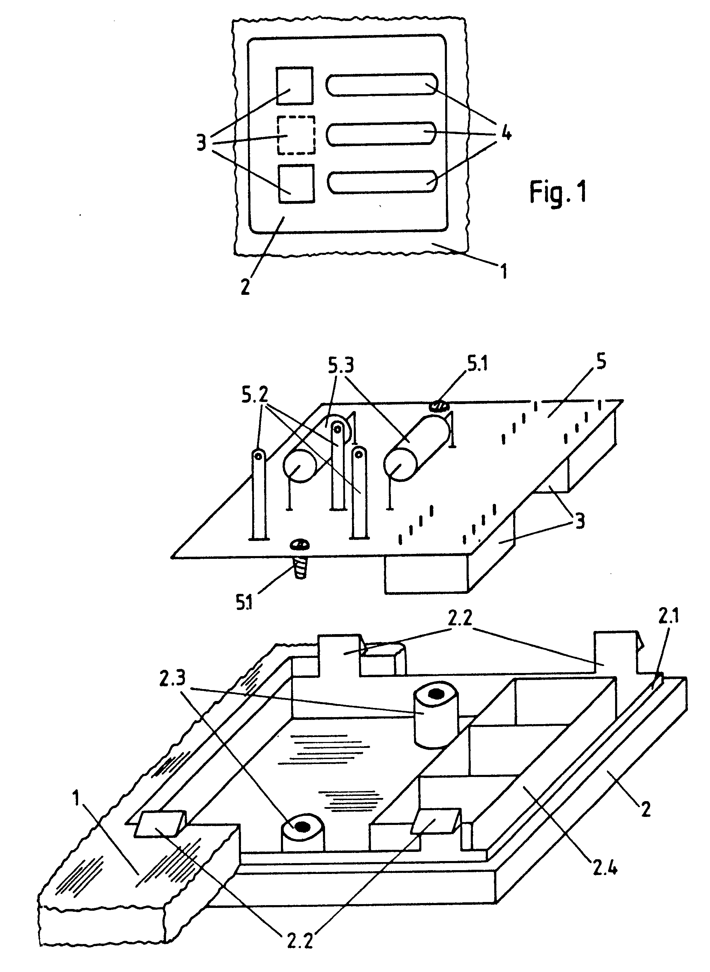

Fig. 1 zeigt eine Ansicht der Vorder- bzw. Frontseite einer elektrooptischen Anzeigevorrichtung nach der Erfindung, eingesteckt in einen Ausschnitt einer Gerätewand oder Frontplatte 1. Von einer quadrati-

schen Blende 2 sind Anzeigelampen 3 bzw. die Leuchtflächen von Anzeigelampen 3 umrahmt, welche auf der Blendenfläche im linken Drittel untereinander angeordnet sind. Neben jeder der Anzeigelampen 3 sind jeweils auf gleicher Höhe längliche Beschriftungsfelder 4 in den rechten zwei Dritteln der Blendenfläche angeordnet. Die Blendenfläche kann beispielsweise aus schwarzem, oberflächlich mattem Kunststoff bestehen, welche nur auf den Beschriftungsfeldern 4 eine glatte Oberfläche aufweist, damit dort z.B. Klebeschilder gut haftend angebracht werden können. Selbstverständlich kann die Beschriftung auch durch Aufdruck oder Gravur erfolgen.

Fig. 2 zeigt in einer vereinfachten perspektivischen Darstellung konstruktive Details der Rückseite der Blende 2 sowie eine Trägerplatte 5 mit ihrer Bestückung. Die quadratische Blende 2 ist vorzugsweise etwas grösser als der ebenfalls quadratische Ausschnitt in der Frontplatte 1, um diesen völlig abdecken zu können. Auf ihrer Rückseite ist sie mit ersten Stegen 2.1 versehen, welche im eingesteckten Zustand der elektrooptischen Anzeigevorrichtung in den Ausschnitt hineinragen, parallel zu dessen Kanten verlaufen und an diesen anliegen, wodurch sie ein Verschieben oder Verdrehen der Blende 2 im Ausschnitt verhindern. Im Ausschnitt arretierbar ist die Blende 2 mittels Schnappvorrichtungen 2.2, deren Einrastnasen im eingesteckten Zustand die jeweils hinteren Kanten des Ausschnitts der Frontplatte 1 rastend umgreifen. Vorzugsweise ist jede der Schnappvorrichtungen 2.2 mit mehreren hintereinander gestaffelten Einrastnasen versehen, damit die elektrooptische Anzeigevorrichtung in Frontplatten 1 verschiedener Stärke arretierbar ist. Auf die Rückseite der Blende 2 aufgesetzt sind weiter Abstandshalter 2.3 und 2.4. Deren Form ist an sich beliebig doch müssen sie eine einheitliche, mit der Tiefe der Anzeigelampe 3 in etwa übereinstimmende Höhe aufweisen. Im Beispiel von Fig. 2 sind die Abstandshalter durch zwei Sockel 2.3 sowie zweite, die quadratischen Ausschnitte für die Leuchtflächen der Anzeigelampen 3 in der Blende 2 wie Fassungen umrahmende Stege 2.4 ausgebildet. Die Abstandshalter 2.3, 2.4 sind mit der Blende 2 fest verbunden und vorzugsweise aus einem Stück mit ihr gefertigt. Auf die Abstandshalter 2.3, 2.4 aufgesetzt und an ihnen befestigt ist die Trägerplatte 5. Die Befestigung der Trägerplatte kann einfach mittels in die Sockel 2.3 eindrehbare Schrauben 5.1 erfolgen. Die Trägerplatte 5 besteht aus einem Isolierstoff und weist Lötpunkte und Leiterbahnen auf ihrer Oberfläche auf. Die Fläche der Trägerplatte 5 ist kleiner als die Fläche des Ausschnitts in der Frontplatte 1, damit die Trägerplatte 5 verbunden mit der Blende 2 von vorn in den Ausschnitt einsteckbar ist. Bestückt ist die Trägerplatte 5 auf ihrer der Blende 2 zugewandten Seite mit den Anzeigelampen 3. Im Beispiel von Fig. 2 ist die Trägerplatte 5 nur mit zwei Anzeigelampen 3 bestückt, obwohl die Trägerplatte 5 grundsätzlich für die Bestückung mit drei Anzeigelampen ausgebildet ist. Auch kann sie selbstverständlich nur mit einer einzigen Anzeigelampe 3 bestückt sein. Wieviel Anzeigelampen 3 Verwendung finden, hängt von den Erfordernissen des jeweiligen Anwendungsfalls ab

und kann diesem speziell angepasst werden. Werden mehr als eine Anzeigelampe 3 verwendet, so kann die elektrooptische Anzeigevorrichtung als Mehrfachfunktionsanzeige eingesetzt werden. Unberührt von der Anzahl der verwendeten Anzeigelampen 3 bleiben alle bisher beschriebenen Konstruktionsmerkmale der elektrooptischen Anzeigevorrichtung, insbesondere die Grösse und Form des Ausschnitts in der Frontplatte 1. In der Blende 2 werden nur so viele Ausschnitte angebracht, wie Anzeigelampen 3 verwendet sind. So ist in Fig. 1 in Übereinstimmung mit der Anordnung der Anzeigelampen in Fig. 2, die mittlere der drei Anzeigeflächen der Anzeigelampen 3 strichliert gezeichnet, wodurch angedeutet sein soll, dass die Blende hier nicht durchbrochen ist, d.h. hier keinen Ausschnitt aufweist.

Die Gehäuse der an sich aus dem vorgenannten Katalog (Seiten 60.7, 60,8) bekannten Anzeigelampen 3 weisen die Form eines Quaders auf. Die Leuchtflächen der Anzeigelampen 3 sind nach vorn, d.h. nach der Blende 2 zugerichtet. Sie sind eben, matt und quadratisch. Aus der Rückseite der Gehäuse ragen jeweils Kontaktstifte in zwei parallelen Reihen hervor. Mit diesen Kontaktstiften sind die Gehäuse in entsprechend angeordnete Bohrungen im Zentrum von Lötpunkten auf die Trägerplatte 5 gesteckt und dort angelötet. Damit sind die Anzeigelampen 3 zugleich mechanisch befestigt als auch elektrisch kontaktiert. In den Gehäusen der Anzeigelampen 3 sind jeweils mehrere Leuchtdioden integriert. Auf jede Leuchtdiode kommen zwei der erwähnten Kontaktstifte. Auf ihrer der Blende 2 abgewandten Seite ist die Trägerplatte 5 mit Kontaktelementen 5.2 bestückt, die vorzugsweise als Steckkontakte ausgebildet sind und ebenfalls an Lötpunkten auf der Trägerplatte 5 angelötet sind. Für jede der beiden Anzeigelampen 3 ist in Fig. 2 je ein individueller, sowie gemeinsam für beide Anzeigelampen 3 ein weiterer, als Masseanschluss dienender Steckkontakt 5.2 vorgesehen. Die Steckkontakte 5.2 sind über Leiterbahnen, die in Fig. 2 nicht dargestellt sind, mit den Kontaktstiften der Anzeigelampen 3 elektrisch verbunden.

Um die elektrooptische Anzeigevorrichtung auch an eine Signalspannungsquelle anschliessen zu können, welche eine höhere Spannung als die normale Versorgungsspannung der Anzeigelampen 3 aufweist, ist die Trägerplatte 5 noch auf ihrer von der Blende 2 abgewandten Seite pro Anzeigelampe 3 oder auch gemeinsam für alle Anzeigelampen 3 mit einem Vorwiderstand oder einem Kondensator 5.3 bestückt, in welchem/en ein Teil der Spannung der Signalspannungsquelle abfällt.

In der beschriebenen Ausführungsform weist die elektrooptische Anzeigevorrichtung eine äusserst geringe Tiefe auf. Die speziell verwendeten Anzeigelampen 3 haben nur einen geringen Leistungsbedarf, sind stossfest, staubdicht und besitzen eine hervorragende Leuchtkraft.

**Patentansprüche**

1. Elektrooptische Anzeigevorrichtung mit wahlweise einer oder mehreren Anzeigelampen (3) und einer in einen Ausschnitt einer Frontplatte (1) einsteckbaren und darin arretierbaren, die Anzeigelampe/n (3) umrahmenden Blende (2), dadurch gekennzeichnet, dass die Blende (2) unabhängig von der Anzahl der Anzeigelampen (3) eine einheitliche, zur Umrahmung mehrerer Anzeigelampen (3) ausreichende Fläche aufweist, auf ihrer Vorderseite der/den Anzeigelampe/n (3) ein/jeweils ein Beschriftungsfeld (4) zugeordnet ist, auf der Rückseite an der Blende (2) eine zusammen mit dieser in den Ausschnitt einsteckbare Trägerplatte (5) angebracht ist, an welcher die Anzeigelampe/n (3) befestigt und elektrisch kontaktiert ist/sind und welche auf ihrer der Blende (2) abgewandten Seite Kontaktelemente (5.2) aufweist.

2. Anzeigevorrichtung nach Anspruch 1, dadurch gekennzeichnet, dass die Trägerplatte (5) eine Isolierstoffplatte ist, auf welche in ihrem Zentrum mit Bohrungen versehene Lötpunkte und diese verbindende Leiterbahnen aufgebracht sind.

3. Anzeigevorrichtung nach einem der Ansprüche 1 oder 2, dadurch gekennzeichnet, dass die Anzeigelampe/n (3) aus mehreren, insbesondere vier, in einem quaderförmigen Gehäuse mit matter, ebener und quadratischer Leuchtfläche integrierten Leuchtdioden aufgebaut ist/sind, auf der der Leuchtfläche entgegengesetzten Seite aus dem Gehäuse pro Leuchtdiode zwei in zwei parallelen Reihen angeordnete Kontaktstifte herausragen, und das Gehäuse mit den Kontaktstiften auf die Trägerplatte gesteckt und dort angelötet ist.

4. Anzeigevorrichtung nach einem der Ansprüche 1 bis 3, dadurch gekennzeichnet, dass die Kontaktelemente (5.2) als Steckkontakte ausgebildet und auf Lötpunkten der Trägerplatte (5) angelötet sind.

5. Anzeigevorrichtung nach einem der Ansprüche 1 bis 4, dadurch gekennzeichnet, dass die Trägerplatte (5) auf ihrer der Blende (2) abgewandten Seite pro Anzeigelampe (3) mit einem vorzugsweise auf ihr angelöteten Vorwiderstand oder einem Kondensator (5.3) bestückt ist.

6. Anzeigevorrichtung nach einem der Ansprüche 1 bis 5, dadurch gekennzeichnet, dass die Blende (2) und die auf ihr angebrachte Trägerplatte (5) quadratisch sind, dass die Anzeigelampe (3) in Blickrichtung im linken Drittel, bei mehreren Anzeigelampen (3) im linken Drittel untereinander und das/die Beschriftungsfeld/er (4) jeweils daneben in den rechten zwei Dritteln der Blendenfläche angeordnet sind.

7. Anzeigevorrichtung nach einem der Ansprüche 1 bis 6, dadurch gekennzeichnet, dass entsprechend der Tiefe der Anzeigelampe/n (3) dicke oder hohe Abstandshalter (2.3) zwischen der Blende (2) und der Trägerplatte (5) vorgesehen sind, welche vorzugsweise mit der Blende (2) verbunden bzw. mit ihr aus einem Stück gefertigt sind.

8. Anzeigevorrichtung nach einem der Ansprüche 1 bis 7, dadurch gekennzeichnet, dass die Blende (2) mittels Schnappvorrichtungen (2.2) in dem Ausschnitt arretierbar ist und die Schnappvorrichtungen (2.2) im Hinblick auf Frontplatten (1) verschiedener Stärke mehrere hintereinander gestaffelt angeordnete Einrastnasen aufweist.

9. Anzeigevorrichtung nach einem der Ansprüche 1 bis 8, dadurch gekennzeichnet, dass die Blende (2) auf ihrer Rückseite mit ersten Stegen (2.1) versehen ist, welche im eingesteckten Zustand der Anzeigevorrichtung an Kanten des Ausschnitts anliegen und ein Verschieben der Blende (2) im Ausschnitt verhindern.

10. Anzeigevorrichtung nach einem der Ansprüche 8 oder 9, dadurch gekennzeichnet, dass die Schnappvorrichtungen (2.2) und/oder die Stege (2.1) entlang von Quadratseiten angeordnet sind und die Blende (2) in einem quadratischen Ausschnitt arretieren.

## Claims

1. Electro-optical indication device having optionally one or more indicating lamps (3) and a cover plate (2) which frames the indicating lamp/s (3) and can be inserted into a cutout in a front panel (1) and can be locked in it, characterized in that the cover plate (2) has a uniform area, independently of the number of indicating lamps (3), which is sufficient for framing several indicating lamps (3), on its front side a/in each case one field of lettering (4) is allocated to the indicating lamp/s (3), on the reverse side a carrier plate (5) is attached to the cover plate (2) which can be inserted together with the cover plate into the cutout, at which carrier plate the indicating lamp/s (3) is/are attached and in electrical contact and which has contact elements (5.2) at its side facing away from the cover plate (2).

2. Indicating device according to Claim 1, characterized in that the carrier plate (5) is an insulating-material plate to which soldering points, provided with holes in their centre, and conductor tracks connecting these points are applied.

3. Indicating device according to one of Claims 1 or 2, characterized in that the indicating lamp/s (3) is/are constructed of several, particularly four, light-emitting diodes integrated in a cube-shaped housing having a matt, plain and square luminous area, two contact pins per light-emitting diodes, arranged in two parallel rows, project from the housing on the side opposite to the luminous area, and the housing is plugged with the contact pins onto the carrier plate and is there soldered on.

4. Indicating device according to one of Claims 1 to 3, characterized in that the contact elements (5.2) are constructed as plug contacts and are soldered to soldering points of the carrier plate (5).

5. Indicating device according to one of Claims 1 to 4, characterized in that the carrier plate (5) is equipped on its side facing away from the cover plate (2), per indicating lamp (3), with a bias resistor, preferably soldered to it, or a capacitor (5.3).

6. Indicating device according to one of Claims 1 to 5, characterized in that the cover plate (2) and the carrier plate (5) attached to it are square, that the indicating lamp is arranged in the left third, in the left third below each other in the case of several indicating lamps (3), and the field/s of lettering (4) are in each case arranged next to it/them in the right-hand two thirds of the cover plate area.

7. Indicating device according to one of Claims 1 to 6, characterized in that, corresponding to the depth of the indicating lamp/s (3), thick or high spacers (2.3) are provided between the cover plate (2) and the carrier plate (5) which are preferably joined to the cover plate (2) or are integrally produced with the cover plate.

8. Indicating device according to one of Claims 1 to 7, characterized in that the cover plate (2) can be locked into the cutout by means of snap-on devices (2.2) and the snap-on devices (2.2) have several lock-in noses which are arranged to be staggered behind each other, having regard to front panels (1) having different thicknesses.

9. Indicating device according to one of Claims 1 to 8, characterized in that the cover plate (2) is provided at its reverse side with first ridges (2.1) which, in the inserted condition of the indicating device, rest against edges of the cutout and prevent the cover plate (2) from shifting in the cutout.

10. Indicating device according to one of Claims 8 or 9, characterized in that the snap-on devices (2.2) and/or the ridges (2.1) are arranged along square sides and lock the cover plate (2) in a square cutout.

**Revendications**

1. Dispositif d'affichage électro-optique comportant au choix un ou plusieurs voyants (3) et un écran (2) encadrant le/les voyant(s) (3) pouvant être inséré dans une découpe d'une plaque avant (1) et être bloqué dans celle-ci, caractérisé en ce que l'écran (2), indépendamment du nombre de voyants (3), présente une surface d'une pièce suffisante pour encadrer plusieurs voyants (3), avec, sur sa face antérieure, une zone d'inscription (4) associée au voyant (3) ou à chacun des voyants (3), une plaque de support (5), qui peut être enfichée dans la découpe en même temps que l'écran (2), étant montée sur la face arrière de l'écran, le/les voyant(s) (3) étant fixé(s) sur cette plaque et étant connecté(s) électriquement et cette plaque présentant des éléments de contact (5.2) sur sa face opposée à l'écran (2).

2. Dispositif d'affichage suivant la revendication 1, caractérisé en ce que la plaque de support (5) est une plaque en matière isolante sur laquelle sont prévus des points de brasage percés en leur centre et des pistes conductrices qui les connectent.

3. Dispositif d'affichage suivant la revendication 1 ou 2, caractérisé en ce que le/les voyant(s) (3) est/sont formé(s) de plusieurs, en particulier quatre, diodes électroluminescentes intégrées dans un boîtier parallélipédique à surface d'éclairage mate, plane et carrée, et, du côté opposé à la surface d'éclairage, pour chaque diode électroluminescente, deux broches de contact disposées en deux séries parallèles ressortent chaque fois du boîtier et le boîtier, avec les broches de contact, est enfiché sur la plaque de support et y est brasé.

4. Dispositif d'affichage suivant l'une quelconque des revendications 1 à 3, caractérisé en ce que les éléments de contact (5.2) ont la forme de contacts à fiche et sont brasés sur des points de brasure de la plaque de support (5).

5. Dispositif d'affichage suivant l'une quelconque des revendications 1 à 4, caractérisé en ce que la plaque de support (5) est dotée sur sa face opposée à l'écran (2), pour chaque voyant (3), d'une résistance série ou d'un condensateur (5.3) qui y est de préférence brasé.

6. Dispositif d'affichage suivant l'une quelconque des revendications 1 à 5, caractérisé en ce que l'écran (2) et la plaque de support (5) montée sur cet écran sont carrés, et le voyant (3) est disposé, dans la direction du regard, dans le tiers gauche ou, dans le cas de plusieurs voyants (3), ceux-ci sont disposés l'un en dessous de l'autre dans le tiers gauche, tandis que la ou les zones d'inscription (4) sont disposées chaque fois à côté des voyants dans les deux tiers droits de la surface de l'écran.

7. Dispositif d'affichage suivant l'une quelconque des revendications 1 à 6, caractérisé en ce que des entretoises (2.3), d'une épaisseur ou d'une hauteur correspondant à la profondeur du ou des voyants (3), sont prévues entre l'écran (2) et la plaque de support (5) et sont de préférence reliées à l'écran (2) ou sont venues d'une pièce avec celui-ci.

8. Dispositif d'affichage suivant l'une quelconque des revendications 1 à 7, caractérisé en ce que l'écran (2) peut être bloqué dans la découpe au moyen de dispositifs à déclic élastiques (2.2) et les dispositifs à déclic élastiques (2.2) présentent plusieurs crans d'encliquetage échelonnés l'un derrière l'autre pour des plaques avant (1) d'épaisseurs différentes.

9. Dispositif d'affichage suivant l'une quelconque des revendications 1 à 8, caractérisé en ce que l'écran (2) est pourvu, sur sa face postérieure, de premières nervures (2.1) qui, dans l'état inséré du dispositif d'affichage, s'appliquent contre les bords de la découpe et empêchent tout déplacement de l'écran (2) dans cette découpe.

10. Dispositif d'affichage suivant la revendication 8 ou 9, caractérisé en ce que les dispositifs à déclic élastiques (2.2) et/ou les nervures (2.1) sont disposés le long des côtés d'un carré et bloquent l'écran (2) dans une découpe carrée.

Fig. 1